# EUROPEAN PATENT APPLICATION

(11) **EP 4 568 066 A1**
(43) Date of publication of application: **11.06.2025**
(21) Application number: 23849815.8
(22) Date of filing: 04.07.2023
(51) Int. Cl.: H02K 1/276

(54) **EMBEDDED-MAGNET TYPE ROTARY ELECTRIC MOTOR AND ELECTRIC DEVICE**

(30) Priority: 04.08.2022 JP 2022125129
(71) Applicant: Hitachi Industrial Equipment Systems Co., Ltd., Tokyo 101-0021 (JP)
(72) Inventor: ISHIGE, Hikaru, Tokyo 101-0021 (JP); TSUJI, Yuji, Tokyo 100-8280 (JP); KAWASHIMA, Takuya, Tokyo 101-0021 (JP); FUJISAWA, Yukinari, Tokyo 101-0021 (JP); SHIBAMOTO, Yuki, Tokyo 101-0021 (JP); FURUHASHI, Takahiro, Tokyo 101-0021 (JP)
(74) Representative: MERH-IP Matias Erny Reichl Hoffmann Patentanwälte PartG mbB
(86) International application number: PCT/JP2023/024805
(87) International publication number: WO 2024/029256

(57) **Abstract**

An embedded magnet type rotary motor comprising: a stator; and a rotor having a rotor core with a plurality of permanent magnets embedded therein and held inside the stator for rotation around a rotation axis, wherein the plurality of permanent magnets are held in the outer circumference of the rotor core, spaced from each other in a circumferential direction, and have magnetic poles at both ends in the circumferential direction; the rotor core has a plurality of lightening holes spaced from each other in the circumferential direction on the rotation axis side of the plurality of permanent magnets; each of the plurality of lightening holes has a bottom wall surface portion extending in the circumferential direction on the rotation axis side, an outer circumferential wall surface portion on the outer circumferential side, and a side wall surface portion connecting between the bottom wall surface portion and the outer circumferential wall surface portion; and the outer circumferential wall surface portion has an inclined wall surface portion that approaches the rotation axis as it moves from the center of one of the plurality of permanent magnets toward the magnetic pole side.

## Description

### Technical Field

The present invention relates to an embedded magnet type rotary motor and an electric motor using the same, and to in particular to an embedded magnet type rotary motor including a stator having a stator coil and a rotor having a rotor core with multiple permanent magnets embedded therein and held inside the stator so as to be rotatable about the rotation axis, and an electric device equipped with the embedded magnet type rotary motor.

### Background Art

There are various technologies for improving an embedded magnet type rotary motor (IPM motor) with a stator having a stator coil and a rotor having a rotor core with a plurality of permanent magnets embedded therein and held rotatable around a rotation axis inside the stator. For example, Japanese Patent Application Laid-Open No. 2012-235608 describes a technique in which thin plate-shaped high-permeability members, having a higher magnetic permeability than the material of the rotor core, are stacked in a substantially radial direction at the outer peripheral part of the circumferential end of the permanent magnet embedded in the rotor core. Japanese Patent Application Laid-Open No. 2012-235608 describes that the above mentioned configuration can suppress the generation of eddy currents at the edge of the permanent magnet and avoid the loss of structural reliability. In addition, Japanese Patent Application Laid-Open No. 2012-235608 describes forming a walled-out recess in the rotor core in order to reduce the weight of the rotor core. The walled-out recesses can reduce the weight of the rotor core.

However, Japanese Patent Application Laid-Open No. 2012-235608 does not describe a method for increasing the responsiveness of torque change. If the response of the torque change of an embedded magnet type rotating machine is increased, the rotational force of the embedded magnet type rotary motor can be more finely controlled. Therefore, even with the technology described in Publication No. 2012-235608, it is not easy to increase the response of torque change of the embedded magnet type rotary motor.

The purpose of the present disclosure is to provide an embedded magnet type rotary motor that can improve the responsiveness of torque change while suppressing the decrease in torque, and an electric device equipped with the embedded magnet type rotary motor.

To solve the above problem, an aspect of the embedded magnet type rotary motor of the present disclosure is an embedded magnet type rotary motor comprising: a stator that has a stator coil; and a rotor having a rotor core with a plurality of permanent magnets embedded therein and held inside the stator so as to be rotatable about a rotation axis, wherein the plurality of permanent magnets are held in an outer circumference portion of the rotor core, spaced from each other in a circumferential direction, and have magnetic poles at both ends in the circumferential direction; the rotor core has a plurality of lightening holes spaced from each other in the circumferential direction on the rotation axis side of the plurality of permanent magnets; each of the plurality of lightening holes has a bottom wall surface portion extending in the circumferential direction on the rotation axis side, an outer circumferential wall surface portion on the outer circumferential side, and a side wall surface portion connecting between the bottom wall surface portion and the outer circumferential wall surface portion; and the outer circumferential wall surface portion has an inclined wall surface portion that approaches the rotation axis as it moves from the center of one of the plurality of permanent magnets toward the magnetic pole side.

According to the present disclosure, the response of torque change can be improved in the embedded magnet type rotary motor while suppressing the reduction of torque.

Issues, configurations and effects other than those described above will be clarified in the following description of the embodiments of the invention.

### Brief Description of Drawings

[Fig. 1] Fig. 1 is a schematic side view of one example of an embodiment of an electric device.
[Fig. 2] Fig. 2 is a schematic cross-sectional view of an embedded magnet type rotary motor.
[Fig. 3] Fig. 3 is a schematic cross-sectional view of a rotor 100 of the embedded magnet type rotary motor.
[Fig. 4] Fig. 4 is a schematic cross-sectional view of the rotor 100 of the embedded magnet type rotary motor.
[Fig. 5] Fig. 5 is an example of a graph showing the relative value of the magnitude of the rotor moment of inertia to the angle α [deg].
[Fig. 6] Fig. 6 is an example of a graph showing the relative value of the magnitude of torque to the angle α [deg] .
[Fig. 7] Fig. 7 is a schematic cross-sectional view of the rotor 100 of an embedded magnet type rotary motor.
[Fig. 8] Fig. 8 is a schematic cross-sectional view of the rotor 100 of an embedded magnet type rotary motor.

### Description of Embodiments

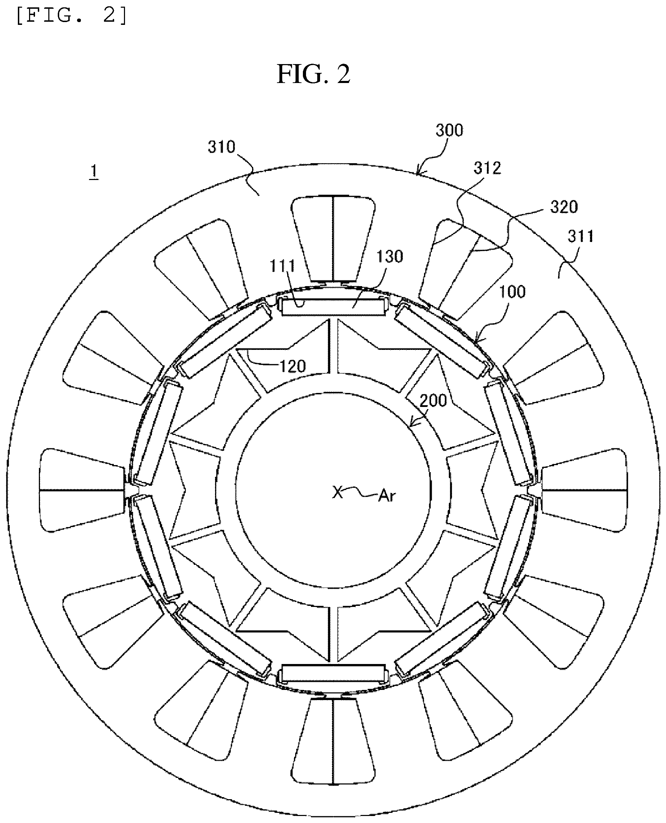

The embodiments are described below with reference to the drawings. In Figs. 2 to 4, Fig. 7, and Fig. 8, hatching for cross-sectional display is omitted to make the figures easier to read. In the figures and explanations of the embodiments, identical parts are given the same symbols, but the present invention is not limited to the embodiments, and all applications that conform to the idea of the invention are included in the technical scope of the present invention. The position, size, shape, extent, number, etc. of each element shown in the drawings, etc., represent an example to facilitate understanding of the present invention, and the position, size, shape, extent, number, etc. of each element are not limited to the contents disclosed in this specification and the drawings.

### <<Overall composition>>

### <Configuration of an electric device 500>

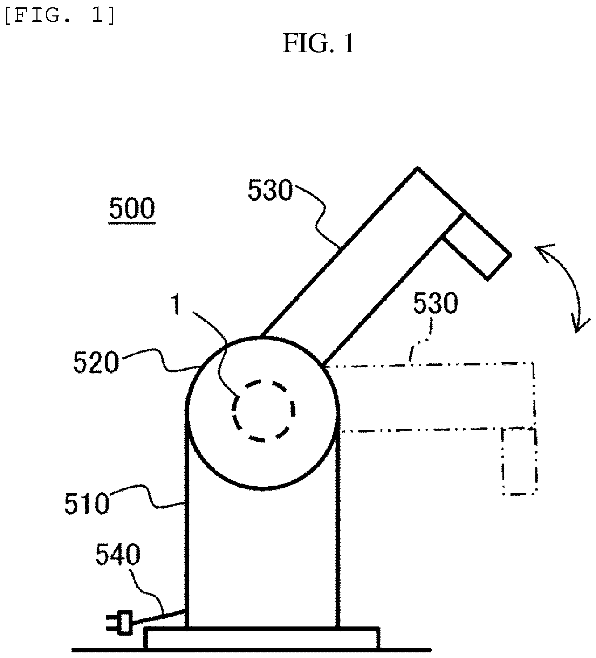

Fig. 1 is a schematic side view of one example of the electric device 500.

The electric device 500 shown in Fig. 1 is a robot arm with a body part 510, a joint part 520, an arm part 530, and a power feed part 540 as one example of an electric device with an embedded magnet type rotary motor 1. The electric device 500 can bend at the joint part 520 between the body part 510 and the arm part 530. Inside the joint part 520, there is an embedded magnet type rotary motor 1 that controls the bending of the arm part 530 at the joint part 520. The power feed part 540 supplies electricity to the embedded magnet type rotary motor 1.

The electric device 500 shown in Fig. 1 is an example of the electric device with the embedded magnet type rotary motor 1. The electric device 500 needs only be a device that uses the embedded magnet type rotary motor 1 as a drive source. The electric device 500 may be, for example, a vehicle such as a hybrid vehicle, an electric vehicle or a railroad vehicle, an industrial robot, a bending machine, or a servo press.

### <Configuration of embedded magnet type rotary motor 1>

Fig. 2 shows a schematic cross-sectional view of the embedded magnet type rotary motor 1. As shown in Fig. 2, the embedded magnet type rotary motor 1 has a rotor 100, a shaft 200, and a stator 300. It should be noted that the rotor 100 shown in Fig. 2 is one example of a rotor 100a, which will be described later in Fig. 2. In the following, the rotors 100a through 100d will be described as examples of the embodiment. The term "rotor 100" is a generic term for the rotors 100a through 100d.

The rotor 100 is held on a shaft 200, inside the stator 300. The shaft 200 is rotatably held in the embedded magnet type rotary motor 1. Thus, the rotor 100 is held inside the stator 300 and rotatable about the axis of rotation of the shaft 200. As described in detail below, the rotor 100 has a rotor core 110 with 10 permanent magnets 130 embedded inside. It should be noted that the number of permanent magnets 130 may be two or more, and may be other than 10. The rotor core 110 is also provided with a lightening hole 120 which is a through-hole.

The stator 300 has a cylindrical yoke 311 and teeth 312 protruding inward from the yoke 311 and wound with stator coils 320. Each of the teeth 312 and the stator coils 320 has 10 pieces, the same number as the number of permanent magnets 130.

The magnetic force of the stator coils 320 in the stator 300 and the permanent magnets 140 in the rotor 100 allow the rotor 100 to rotate with respect to the stator 300. It should be noted that the number of teeth 312 and the number of stator coils 320 can be two or more, and can be other than 12.

### <<Configuration of rotor 100>>

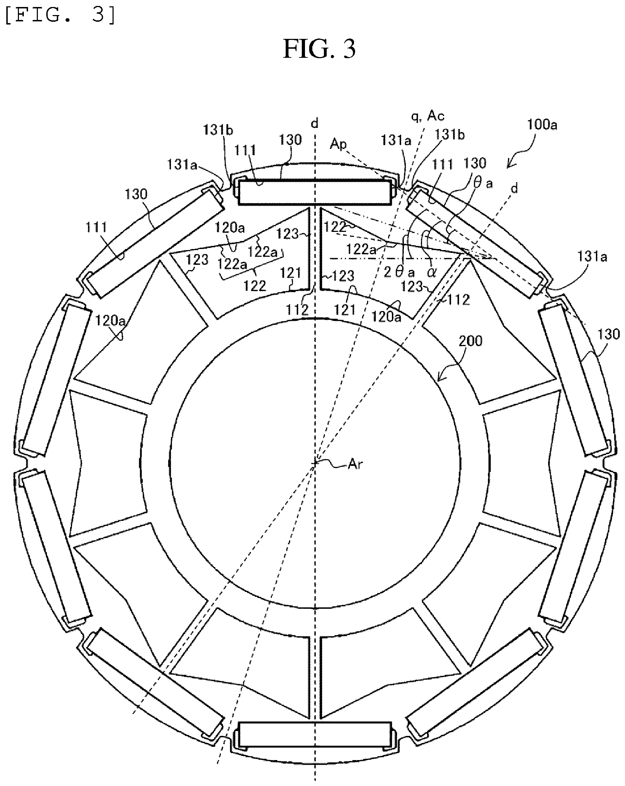

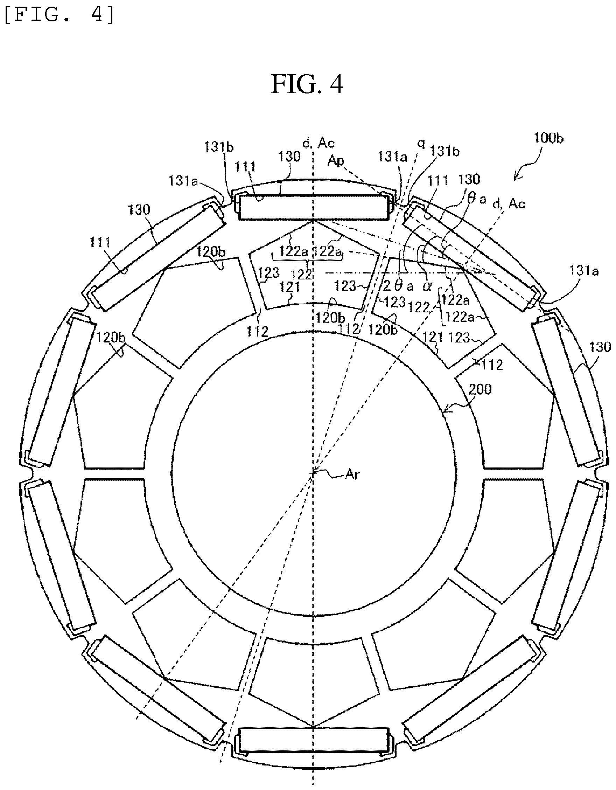

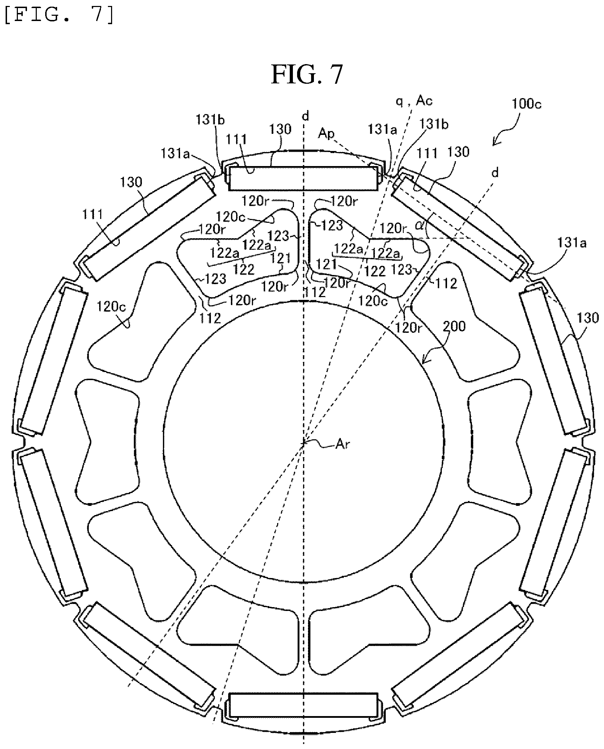

Rotors 100a, 100b, 100c, and 100d, described below, are examples of the rotors 100. The shape of the lightening hole 120 is different between these rotors 100a-100d. As explained below, the rotor 100a (see Fig. 3) has a lightening hole 120a. The rotor 100b (see Fig. 4) has a lightening hole 120b that is arranged differently from the lightening hole 120a. The rotor 100c (see Fig. 7) has a lightening hole 120c with a corner formed in a plane. The rotor 100d (see the figure) has lightening holes 120d1 and 120d2 formed by dividing the lightening hole 120a into two.

### <Configuration of rotor 100a>

Fig. 3 shows a schematic cross-sectional view of the rotor 100a of the embedded magnet type rotary motor 1. As shown in Fig. 3, the rotor 100a has a rotor core 110.

The rotor core 110 is made of thin (e.g., 0.25 to 0.35 mm) press punched electromagnetic steel sheets, the surface of which is coated with a thin insulator, laminated in the axial direction. The rotor core 110 is formed in a cylindrical shape. The rotor core 110 is held by the shaft 200 at the center. As mentioned above, the shaft 200 is rotatably held in the embedded magnet type rotary motor 1. Therefore, the rotor 100a is held inside the stator 300 and rotatable around the axis of rotation of the shaft 200.

The rotor core 110a has a magnet storage hole 111 that holds the permanent magnet 130, the lightening hole 120a, which is a hole through the above thin sheet electromagnetic steel plate of the rotor core 110, and a bridge part 112 between the adjacent lightening holes 120 in the circumferential direction.

The number of magnet storage holes 111 is 10. The 10 (plural) magnet storage holes 111 are spaced apart from each other in the circumferential direction on the outer circumference of the rotor core 110. As a result, the 10 (plural) permanent magnets 130 are held in the outer circumference of the rotor core 110, spaced apart from each other in the circumferential direction.

The permanent magnet 130 is rectangular in cross section. The permanent magnet 130 is held in the magnet storage hole 111 so that the long side of the rectangular cross section faces the outside of the rotor core 110 in the radial direction. The permanent magnet 130 has magnetic poles 131a and 131b at each of the circumferential ends of the rotor core 110. The material of the permanent magnet 130 is ferromagnetic. The permanent magnet 130 may be made of ferromagnetic material, such as ferrite, neodymium, samarium-cobalt, or other ferromagnetic materials.

The lightening holes 120a are through holes through the above thin sheet electromagnetic steel plate of the rotor core 110. The 10 lightening holes 120a are arranged circumferentially with intervals between them on the rotor core 110's rotation axis Ar side of the permanent magnet 130. The lightening holes 120a are provided at a position avoiding the d-axis. In other words, the lightening holes 120a are provided between two adjacent d-axes.

Of the line dividing the lightening hole 120a into two parts, the center line Ac extending radially outward from the rotation axis Ar of the rotor 100a is located overlapping with the d-axis. The d-axis is the line connecting the middle position of the poles 131a and 131b of one permanent magnet 130 and the rotation axis Ar of the rotor 100. The q-axis is the line connecting the middle position of the adjacent magnetic poles 131a and 131b of two circumferentially adjacent permanent magnets 130 and the rotation axis Ar of the rotor 100.

Each of the ten lightening holes 120a has a bottom wall portion 121 extending circumferentially on the rotation axis Ar side of the rotor core 110, an outer circumferential wall surface portion 122 on the outer peripheral side of the rotor core 110, and two side wall portions 123 that extends radially in the rotor 100 and connects the bottom wall portion 121 and the outer circumferential wall surface portion 122.

The outer circumferential wall surface portion 122 has two inclined wall surface portions 122a. The two inclined wall surface portions 122a are connected on the q-axis. Each of the two inclined wall surface portions 122a has a flat surface formed by a plane.

The angle α [deg] formed by an inclined wall surface portion 122a and the inter-pole axis Ap connecting the magnetic poles 131a and 131b at both ends of the permanent magnet 130 is greater than or equal to the angle θa [deg] obtained by dividing 180 degrees by the number Nm of permanent magnets, and is less than or equal to the angle 2θa [deg] obtained by dividing 360 degrees by the number Nm of permanent magnets (θa≦α≦2θa). In the rotor 100a, the number Nm of permanent magnets is 10 and θa = 18 [deg] (θa = 18 ≤ α ≤ 2θa = 36). As described in more detail below, by setting the angle α in this manner (θa≦α≦2θa), it is possible to prevent the magnetic force around the magnetic poles 131a, 131b of the permanent magnet 130 from being reduced by the lightening holes 120a, while also reducing the moment of inertia of the rotor 100. Other effects of the rotor 100a will be described below.

### <Configuration of rotor 100b (Fig. 4)

Fig. 4 shows a schematic cross-sectional view of the rotor 100b of the embedded magnet type rotary motor 1. In the following description of the rotors 100b to 100d, the same symbols are used for the same configuration as the rotor 100a, and their description is omitted. As shown in FIG. 4, the rotor 100b has a lightening hole 120b that is located at a different position from the lightening hole 120a of the rotor 100a shown in Fig. 3. As shown in FIG. 4, the position of the lightening hole 120b of the rotor 100b is rotated from the position of the lightening hole 120a in FIG. 3 by an angle θa [deg] (θa=180/Nm [deg]) obtained by dividing 180 degrees by the number Nm of permanent magnets, about the rotation axis Ac of the rotor 100a. As a result, the lightening hole 120b of the rotor 100b shown in Fig. 4 is located where the center line Ac extending radially outward from the rotation axis Ac of the rotor 100a overlaps the d-axis. It should be noted that the lightening hole 120a in the rotor 100a shown in Fig. 3 is located where the center line Ac extending radially outward from the rotation axis Ac of the rotor 100a overlaps the q-axis.

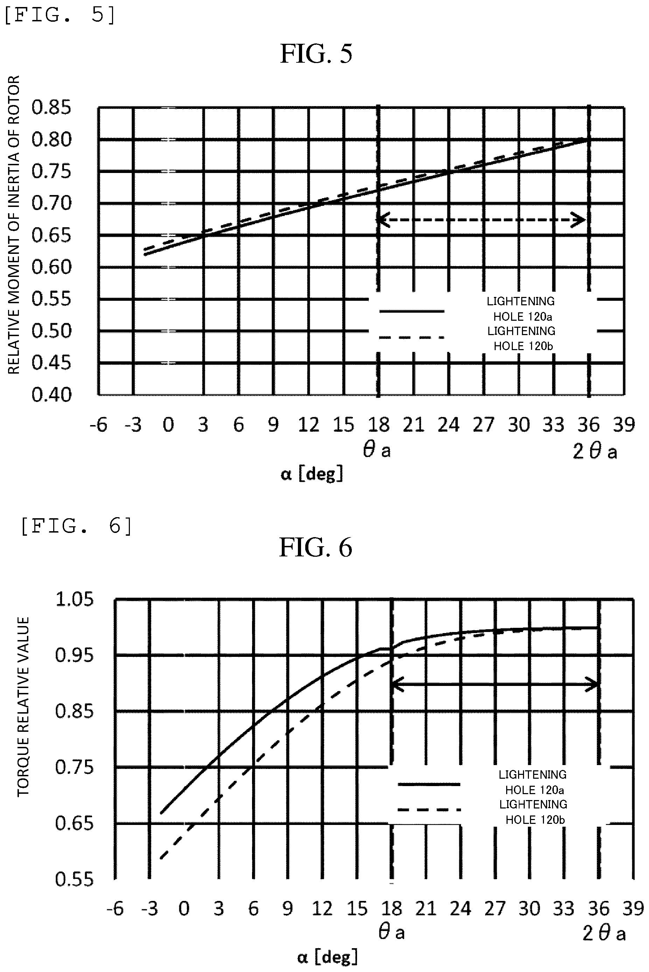

### <Effect of the invention on the rotors 100a and 100b, Fig. 5, Fig. 6>

The embedded magnet type rotary motor 1 can reduce the weight of the rotor core 110 and the moment of inertia of the rotor core 110 by means of the lightening holes 120 (120a, 120b). Therefore, the embedded magnet type rotary motor 1 can improve the response of torque change of the embedded magnet type rotary motor 1 by means of the lightening holes 120.

Furthermore, the lightening hole 120 has the inclined wall surface portion 122a in the outer circumferential wall surface portion 122 that gets closer to the rotation axis Ar as it moves from the center of the permanent magnet 130 to the magnetic poles 131a or 131b side of the permanent magnet 130. As a result, the magnetic poles 131a and 131b of the permanent magnet 130 are spaced apart from the inclined wall surface portion 122a on the permanent magnet 130 side of the lightening hole 120, so that the magnetic force of the magnetic poles 131a and 131b of the permanent magnet 130 is suppressed from being reduced by the lightening hole 120. The magnetic force of the permanent magnet 130 is prevented from being reduced by the lightening holes 120 , and the magnetic force of the permanent magnet 130 is transmitted to the rotor core 110 and can interact with the magnetic force of the stator coil 320 of the stator 300. Therefore, the embedded magnet type rotary motor 1 can suppress the reduction of torque due to the lightening hole 120.

From the above, the embedded magnet type rotary motor 1 can improve the response of torque change while suppressing the decrease in torque.

The lightening holes 120a and 120b are located where the center line Ac extending radially outward from the rotation axis Ar of the rotors 100a and 100b overlaps the d-axis or q-axis of the permanent magnet 130. As a result, the lightening holes 120a and 120b are located in a highly symmetrical position with respect to the permanent magnets 130. As a result, the magnetic force of the stator coil 320 of the stator 300 is restrained from acting biasedly against the magnetic force of the permanent magnet 130 by the lightening holes 120, so the rotors 100a and 100b can rotate more securely and stably.

In the lightening hole 120a (see Fig. 3), the two inclined wall surface portions 122a, which approach the rotation axis Ar as they move from the center of the permanent magnet 130 toward the magnetic poles 131a or 131b, of the outer circumferential wall surface portion 122 are connected on the q-axis. In other words, the portion of the outer circumferential wall surface portion 122 on the q-axis is securely separated from the magnetic poles 131a and 131b of the permanent magnet 130. As a result, the magnetic poles 131a and 131b of the permanent magnet 130 are securely separated from the lightening hole 120a, and the magnetic force of the magnetic poles 131a and 9131b of the permanent magnet 130 is prevented from being reduced by the lightening hole 120a. Therefore, the embedded magnet type rotary motor 1 can more reliably suppress the reduction of torque caused by the lightening hole 120a.

In the lightening holes 120a and 120b, the inclined wall surface portion 122a, which approaches the rotation axis Ar of the rotor core 110 as it moves from the center of the permanent magnet 130 toward the magnetic poles 131a or 131b, has a flat surface portion formed by a flat surface. As a result, the peripheral portions on the q-axis of the outer circumferential wall surface portion 122 are more reliably spaced apart from the magnetic poles 131a and 131b of the permanent magnet 130. As a result, the magnetic poles 131a and 131b of the permanent magnet 130 are more securely separated from the lightening hole 120, and the magnetic force of the magnetic poles 131a and 131b of the permanent magnet 130 is more securely suppressed from being reduced by the lightening hole 120. Therefore, the embedded magnet type rotary motor 1 can more reliably suppress the reduction of torque due to the lightening hole 120.

Next, Figs. 5 and 6 are used to illustrate the comparison of the lightening hole 120a (see Fig. 3), where the center line Ac overlaps the q-axis, and the lightening hole 120b (see Fig. 4), where the center line Ac overlaps the d-axis.

Fig. 5 is an example of a graph showing the relative value of the magnitude of the moment of inertia of the rotor with respect to the angle α [deg]. In the graph in Fig. 5, the relative value of the magnitude of the moment of inertia of the rotor represents the magnitude of the moment of inertia of the rotor 100 having the lightening holes 120 with respect to the magnitude of the moment of inertia of the rotor 100 having no lightening holes 120. In other words, the relative value of the magnitude of the rotor moment of inertia represents the magnitude of the moment of inertia of the rotor 100 with the lightening holes 120 when the magnitude of the moment of inertia of the rotor 100 without the lightening holes 120 is 1.

As shown by a graph in Fig. 5, the lightening holes 120a and 120b are configured so that as the angle α [deg] becomes smaller, the relative value of the magnitude of the moment of inertia of the rotor 100 becomes smaller. Here, the difference between the lightening hole 120a and the lightening hole 120b is small.

Fig. 6 is an example of a graph showing the relative value of the magnitude of the torque with respect to the angle α [deg]. In the graph in Fig. 6, the relative value of the magnitude of the torque of the rotor represents the magnitude of the torque of the rotor 100 having the lightening holes 120 with respect to the magnitude of the torque of the rotor 100 having no lightening holes 120. In other words, the relative value of the magnitude of the torque represents the magnitude of the torque of the rotor 100 having the lightening holes 120 when the magnitude of the torque of the rotor 100 without the lightening holes 120 is 1.

The moment of inertia is proportional to the square of the radius. Therefore, the smaller the angle α [deg], the smaller the moment of inertia of the rotor 100. However, the smaller the angle α, the less the rotor core 110 exists around the magnetic poles 131a and 131b of the permanent magnet 130, so the magnetic force around the magnetic poles 131a and 131b of the permanent magnet 130 is reduced by the lightening holes 120. As a result, the smaller the angle α [deg], the smaller the relative value of the magnitude of the torque of the rotor 100.

As the graph in Fig. 6 shows, the relative value of the magnitude of the torque of the rotor 100 decreases little when the angle α [deg] is between 2θa [deg] and θa [deg] (θa = 180 / (the number Nm of permanent magnets 130)). On the other hand, when the angle α[deg] is between θa[deg] and 0, the decrease in the relative value of the magnitude of the torque of the rotor 100 increases as the angle α[deg] approaches 0. The above suggests that setting the angle α [deg] between 2θa and θa [deg] (θa ≤ α ≤ 2θa) can suppress the decrease in torque. Therefore, based on the above, the angle α [deg] is set between 2θa and θa [deg] (θa ≤ α ≤ 2θa) for the lightening holes 120a through 120d in the embodiment.

Thus, the angle α [deg] between the inclined wall surface portion 122a and the inter-pole axis Ap connecting the magnetic poles 131a, 131b at both ends of the permanent magnet 130 is greater than or equal to the angle θa [deg] obtained by dividing 180 degrees by the number Nm of permanent magnets, and is less than or equal to the angle 2θa [deg] obtained by dividing 360 degrees by the number Nm of permanent magnets (θa≦α≦2θa). This allows the embedded magnet type rotary motor 1 to more reliably suppress the reduction in torque due to the lightening hole 120. As a result, the embedded magnet type rotary motor 1 can improve the response of torque change while more reliably suppressing the reduction in torque.

As the graph in Fig. 6 shows, when the angle α [deg] is between θa [deg] and 0, the relative value of the magnitude of the torque of the rotor 100 is greater for the lightening hole 120a, whose center line is on the q axis, than for the lightening hole 120b, whose center line is on the d axis.

This means that in the lightening hole 120a, whose center line is on the q-axis, there is no lightening hole 120 on the d-axis, but a bridge part 112. When magnetic flux flows through the bridge part 112 formed between circumferentially adjacent lightening holes 120 , the magnetic force can act more effectively in order to rotate the rotor 100. As a result, the embedded magnet type rotary motor 1 can more reliably suppress the reduction in torque.

The electric device 500 is equipped with the embedded magnet type rotary motor. The weight of the embedded magnet type rotary motor 1 is reduced by the lightening hole 120, and the response of torque change can be improved while suppressing the decrease in torque. Therefore, the electric device 500 can be driven with lower energy due to the lighter weight of the embedded magnet type rotary motor 1, and can be driven more efficiently due to the higher responsiveness of the torque change of the embedded magnet type rotary motor 1. Furthermore, by operating efficiently, the electric device 500 can reduce the amount of energy required for operation and the amount of carbon dioxide emissions generated during operation, thereby making it possible to curb global warming.

### <Configuration of rotor 100c>

Fig. 7 shows a schematic cross-sectional view of the rotor 100c of the embedded magnet type rotary motor 1. As shown in Fig. 7, the rotor 100c has a lightening hole 120c with the corner of the lightening hole 120a of the rotor 100a shown in Fig. 3 changed to a curved surface 120r.

Here, the closest proximity to the magnet storage hole 111 that holds the permanent magnet 130 in the lightening hole 120c is at the corner of the inclined wall surface portion 122. The closer the corner of the outer circumferential wall surface portion 122 is to the magnet storage hole 111, the weaker the strength of the magnet storage hole 111 in this closer area.

On the other hand, in the embedded magnet type rotary motor 1, the corner of the outer circumferential wall surface portion 122 is formed with a curved surface 120r, so that the tip of the corner retracts to the back, thus separating the magnet storage hole 111 and the corner of the outer circumferential wall surface portion 122. In this way, by separating the lightening hole 120c from the magnet storage hole 111, the strength of the magnet storage hole 111 can be ensured.

Furthermore, the corners of the lightening hole 120c are formed with curved surfaces 120r, which prevents stress from concentrating in some of the corners of the lightening hole 120c and damaging the lightening hole 120c. As described above, the embedded magnet type rotary motor 1 can ensure the strength of the magnet storage hole 111 and the lightening hole 120c by having the corners of the lightening hole 120c formed with curved surfaces 120r.

### <Configuration of rotor 100d>

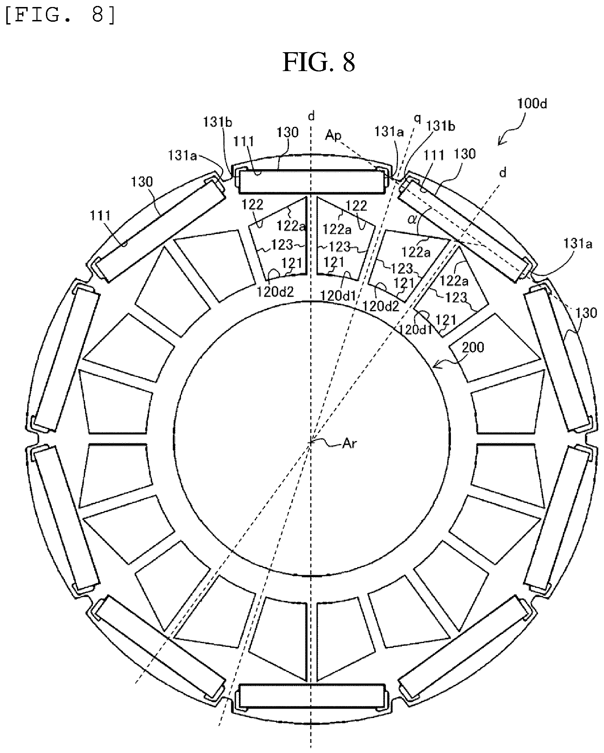

Fig. 8 shows a schematic cross-sectional view of the rotor 100d of the embedded magnet type rotary motor 1. As shown in Fig. 8, the rotor 100d has the lightening hole 120d1 and the lightening hole 120d2, which are the lightening hole 120a of the rotor 100a shown in Fig. 3, divided by the q-axis.

The embedded magnet type rotary motor 1 can reduce the weight of the rotor core 110 and the moment of inertia of the rotor core 110 by means of the lightening holes 120d1 and 120d2. Therefore, the response of the torque change of the embedded magnet type rotary motor 1 can be enhanced by the lightening holes 120d1 and 120d2.

Furthermore, the lightening holes 120d1 and 120d2 have the inclined wall surface portion 122a that is present on the outer circumferential wall surface portion 122 and that approaches the rotation axis Ar as it moves from the center of the permanent magnet 130 toward the magnetic pole 131a or 131b side. As a result, the magnetic poles 131a, 131b of the permanent magnet 130 are spaced apart from the inclined wall surface portion 122a on the permanent magnet 130 side of the lightening holes 120d1 and 120d2, thereby preventing the magnetic force of the magnetic poles 131a, 131b of the permanent magnet 130 from being reduced by the lightening holes 120d1 and 120d2. While suppressing the reduction of the magnetic force of the permanent magnet 130 by the lightening holes 120d1 and 120d2, the magnetic force of the permanent magnet 130 can be transmitted to the rotor core 110 and interact with the magnetic force of the stator coil 320 of the stator 300. Therefore, the embedded magnet type rotary motor 1 can suppress the reduction of torque due to the lightening holes 120d1 and 120d2.

From the above, the embedded magnet type rotary motor 1 can improve the response of torque change while suppressing the decrease in torque.

In addition, since there are no lightening holes 120d1 and 120d2 on the d-axis, the magnetic flux flows through the bridge part 112 formed between the circumferentially adjacent lightening holes 120d1 and 120d2, and the magnetic force can act more effectively in order to rotate the rotor 100. As a result, the embedded magnet type rotary motor 1 can more reliably suppress the reduction in torque.

Furthermore, the angle α [deg] between the inclined wall surface portion 122a and the inter-pole axis Ap connecting the magnetic poles 131a, 131b at both ends of the permanent magnet 130 is greater than or equal to the angle θa [deg] obtained by dividing 180 degrees by the number Nm of permanent magnets, and is less than or equal to the angle 2θa [deg] obtained by dividing 360 degrees by the number Nm of permanent magnets (θa≦α≦2θa). This allows the embedded magnet type rotary motor 1 to more reliably suppress the reduction in torque due to the lightening hole 120. As a result, the embedded magnet type rotary motor 1 can improve the response of torque change while more reliably suppressing the reduction in torque.

The present invention is not limited to the above embodiments, and various variations are possible within the scope of its gist.

### Reference Signs List

1:embedded magnet type rotary motor
100, 100a-100d:rotor
110: rotor core
111: magnet storage hole
112: bridge part
120, 120a-120d: lightening hole
121: bottom wall portion
122: outer peripheral wall portion
122a: inclined wall surface portion
122a1: flat surface part
123: side wall portion
124: curved surface
130: permanent magnet
131a, 131b: magnetic pole
200: shaft
300: stator
310: stator core
311: yoke
312: teeth
320: stator coil
500: electric device
510: body part
520: joint part
530: arm part
540: power feed part
Ar: rotation axis
Ac: center line
Ap: inter-pole axis
d: d axis
q: q axis
Nm:number of permanent magnets
θa: angle
α:angle

## Claims

1. An embedded magnet type rotary motor comprising:
a stator that has a stator coil; and
a rotor having a rotor core with a plurality of permanent magnets embedded therein and held inside the stator so as to be rotatable about a rotation axis,
wherein
the plurality of permanent magnets are held in an outer circumference portion of the rotor core, spaced from each other in a circumferential direction, and have magnetic poles at both ends in the circumferential direction;
the rotor core has a plurality of lightening holes spaced from each other in the circumferential direction on the rotation axis side of the plurality of permanent magnets;
each of the plurality of lightening holes has a bottom wall surface portion extending in the circumferential direction on the rotation axis side, an outer circumferential wall surface portion on the outer circumferential side, and a side wall surface portion connecting between the bottom wall surface portion and the outer circumferential wall surface portion; and
the outer circumferential wall surface portion has an inclined wall surface portion that approaches the rotation axis as it moves from the center of one of the plurality of permanent magnets toward the magnetic pole side.

2. The embedded magnet type rotary motor according to claim 1,
wherein
the lightening hole has a center line extending radially outward from the rotation axis of the rotor, the center line overlapping with a d-axis or a q-axis of the permanent magnet.

3. The embedded magnet type rotary motor according to claim 2,
wherein
the lightening hole has the center line overlapping with the q-axis,
the outer circumferential wall surface portion has the two inclined wall surface portions, and
the two inclined wall portions are connected on the q-axis.

4. The embedded magnet type rotary motor according to claim 3,
wherein
the lightening hole is located in position avoiding on the d-axis.

5. The embedded magnet type rotary motor according to claim 1,
wherein
the inclined wall surface portion has an angle α [deg] with respect to an axis between magnetic poles connecting the magnetic poles at each of the two ends of the permanent magnet, the angle α [deg] being equal to or greater than the angle θa [deg] obtained by dividing 180 degrees by the number Nm of permanent magnets, and is equal to or less than the angle 2θa [deg] obtained by dividing 360 degrees by the number Nm of permanent magnets.

6. The embedded magnet type rotary motor according to claim 1,
wherein
the inclined wall surface portion has a flat surface portion formed by a flat surface.

7. The embedded magnet type rotary motor according to claim 1,
wherein
the lightening hole is formed with curved corners.

8. An electric device equipped with the embedded magnet rotary motor as claimed in claim 1.
